# EUROPÄISCHE PATENTSCHRIFT

(11) **EP 1 689 123 B1**
(45) Veröffentlichungstag und Bekanntmachung des Hinweises auf die Patenterteilung: **07.05.2008**
(21) Anmeldenummer: 05002600.4
(22) Anmeldetag: 08.02.2005
(51) Int. Cl.: H04L 12/26

(54) **Protokolltester für ein Telekommunikationssystem und Verfahren zur Darstellung übertragungsrelevanter Information in einem Telekommunikationssystem**
Protocol tester for a telecommunication system and method for displaying information relevant to transmission in a telecommunication system
Dispositif de contrôle de protocole pour un système de télécommunication et méthode d'affichage des informations important pour la transmission dans un système de télécommunication

(43) Veröffentlichungstag der Anmeldung: 09.08.2006
(73) Patentinhaber: Tektronix International Sales GmbH, 8212 Neuhausen (CH)
(72) Erfinder: Blümcke, Michael, 13583 Berlin (DE); Zander, Christian, 14612 Falkensee (DE)
(74) Vertreter: Schurack, Eduard F.

(56) Entgegenhaltungen:
- EP-A- 0 598 484
- EP-A- 0 621 734
- EP-A- 1 370 028
- JOHAN PERSSON: "JPGraph Manual"[Online] Bd. R, Nr. 1.0, 10. Juli 2002 (2002-07-10), Seiten 85-89, XP002321131 Gefunden im Internet: URL:http://web.dadanini.com:7980/archiv/en twickler/jpgraph/jpgraph_manual.pdf> [gefunden am 2005-03-14]

## Beschreibung

Die vorliegende Erfindung betrifft einen Protokolltester für ein Telekommunikationssystem gemäß dem Oberbegriff des Anspruchs 1. Sie betrifft überdies ein Verfahren zur Darstellung übertragungsrelevanter Information betreffend ein Telekommunikationssystem auf einem Protokolltester gemäß dem Oberbegriff des Anspruchs 2.

Bei der Datenübertragung über ein Telekommunikationssystem ist eine Vielzahl von Übertragungsparametem von Relevanz. Dabei sind unterschiedliche Institutionen an unterschiedlichen Übertragungsparametern interessiert. Der Hersteller eines Netzwerkelements des Telekommunikationssystems ist beispielsweise daran interessiert, dass sein Netzwerkelement bestimmte Übertragungsraten unterschiedlicher Datenübertragungsformate zu verarbeiten in der Lage ist. Diese Eigenschaft kann beispielsweise vorab, d. h. vor Einbau des Netzwerkelements in ein reales Telekommunikationssystem, im Rahmen eines Lasttests ermittelt werden, bei dem das Netzwerkelement an ein virtuelles Telekommunikationssystem angeschlossen wird und entsprechenden Tests unterzogen wird. Ein Netzwerkbetreiber andererseits ist an der Überwachung bestimmter Netzwerkelemente im laufenden Betrieb interessiert, um Schwachstellen, d. h. Engpässe, in seinem Netzwerk zu erkennen, um dadurch rechtzeitig Gegenmaßnahmen einzuleiten. Beispielsweise kann dadurch die Überlastung eines bestimmten Netzwerkelements festgestellt werden und dieses Netzwerkelement durch ein Netzwerkelement mit höherer Kapazität oder durch zwei Netzwerkelemente ersetzt werden. Schließlich sind beide als Beispiel genannte Institutionen, Netzwerkelementhersteller sowie Netzwerkbetreiber, an der statistischen Erfassung der Qualität des Netzwerkelements einerseits und des Netzwerks andererseits interessiert. Problematisch ist die Vielzahl der jeweils interessierenden Übertragungsparameter. Im Stand der Technik werden die jeweiligen Werte der Übertragungsparameter in Form von Balkendiagrammen dargestellt, in denen die einzelnen Übertragungsparameter unabhängig voneinander aufgetragen sind. Es gibt insbesondere zwei Konstellationen, in denen sich die daraus resultierende Unübersichtlichkeit und schwere Erfassbarkeit besonders negativ auswirken: Zum einen werden beispielsweise beim Monitoren eines laufenden Telekommunikationsnetzwerks tragbare Protokolltester eingesetzt, für die keine Möglichkeit vorgesehen ist, vor Ort Ausdrucke zum Zwecke des Vergleichs von Diagrammen der relevanten Übertragungsparameter anzufertigen. Zum anderen ist es häufig so, dass die aktuellen Werte der Übertragungsparameter gegen Vorgaben, beispielsweise eine Norm oder eine Spezifikation, verglichen werden sollen, was beim Stand der Technik in einer noch weniger überschaubaren Darstellung resultiert. Weiterhin lassen sich bei der Vorgehensweise nach dem Stand der Technik die einzelnen Übertragungsparameter, beispielsweise durch Addition, nicht in Beziehung zueinander setzen. Werden beispielsweise im Rahmen eines Lasttests Übertragungsparameter für den Lasttest, insbesondere einen Lasttest betreffend die Übertragungsrate, unterschieden nach der Art der übertragenen Daten festgelegt, so lässt sich im Stand der Technik ein Maß für die Gesamtlast, d. h. die Gesamtübertragungsrate nur durch Addition der einzelnen bewerteten Übertragungsparameter für die einzelnen Übertragungsarten ermitteln

Dies resultiert in der Definition ungeeigneter Tests, in Fehlinterpretationen der Qualität von Netzwerkelementen und Netzwerken und damit letzten Endes in der Gefahr des unwiederbringlichen Verlusts von Daten.

In diesem Zusammenhang sei auf die EP 0 598 484 A2 verwiesen, die ein Verfahren zur Statusüberwachung eines Kommunikationsnetzwerkes, wie eines LAN oder eines SS7-Netzwerks, offenbart. Für jede Domäne oder jedes Segment des Netzwerks werden verschiedene Betriebsparameter gemessen. Die Messwerte werden skaliert, so dass alle Werte im Bereich zwischen 0 und 3 liegen, wobei die Werte 1 und 2 interessierenden Grenzwerten entsprechen. Für jeden Parameter werden entweder die Minima oder die Maxima in einen Multivariantengraphen eingetragen und miteinander zu einer Polygonfigur verbunden.

Ein ähnliches Verfahren ist aus der EP 0 621 734 A2 bekannt. Diese Druckschrift offenbart ein Verfahren und eine Vorrichtung zum Monitoren von Telekommunikationsnetzwerken, wobei drei Multivariantengraphen verwendet werden, um insgesamt 20 Parameter darzustellen.

Die Aufgabe der vorliegenden Erfindung besteht darin, einen eingangs genannten Protokolltester bzw. das eingangs genannte Verfahren derart weiterzubilden, dass der Verlust von Daten bei der Datenübertragung in einem Telekommunikationssystem reduziert werden kann.

Diese Aufgabe wird gelöst durch einen Protokolltester mit den Merkmalen von Patentanspruch 1 und ein Verfahren mit den Merkmalen von Patentanspruch 2.

Erfindungsgemäß sind mehrere Sätze von Werten der Übertragungsparameter vorhanden, wobei eine erste Fläche einem ersten Satz von Werten der Übertragungsparameter entspricht und eine i-te Fläche einem i-ten Satz von Werten der Übertragungsparameter und eine Differenz zweier oder mehrerer Flächen dargestellt wird. Am Beispiel eines Lasttests kann hierbei eine Fläche die für dieses Netzwerkelement in der Position im Telekommunikationsnetzwerk erwartete Last darstellen, während eine andere Fläche die für den Lasttest gegenwärtig spezifizierte Last charakterisiert. Beim Monitoren, auf das weiter unten noch näher eingegangen wird, können die unterschiedlichen Flächen die Übertragungsparameter zu unterschiedlichen Zeitpunkten darstellen. Im Rahmen der Visualisierung von durchgeführten Messungen, auf die ebenfalls weiter unten näher eingegangen wird, kann eine Fläche die Grenzwerte einer Vorgabe oder Norm darstellen, während die andere Fläche die tatsächlich gemessenen Messwerte wiedergibt.

Die Darstellung in einem Multivariantengraph, dessen Achsen von den Übertragungsparametern gebildet werden, ermöglicht dadurch, dass sich die Achsen eines Multivariantengraphen in einem Punkt schneiden, dass die einzelnen Übertragungsparameter sehr viel einfacher in direkte Relation zueinander gesetzt werden und miteinander verglichen werden können, als wenn über verschiedene zur Beurteilung weniger relevante Balken eines Balkendiagramms hinweg zwei Übertragungsparameter miteinander verglichen werden sollen.

Bei einem Lasttest ist die dargestellte Fläche, die sich dadurch ergibt, dass die in den Multivariantengraphen jeweils eingetragenen Werte der mindestens drei Übertragungsparameter zur Erzeugung einer Fläche miteinander verbunden werden, und die ohne Zwischenschritte sofort in ihrer Größe abgeschätzt werden kann, ein Maß für die Gesamtlast, mit der das Netzwerkelement im Rahmen dieses Lasttests beaufschlagt wird.

Bei einer bevorzugten Ausführungsform wird die übertragungsrelevante Information durch lasttestbezogene Daten, werden die Übertragungsparameter durch Lasttestparameter und wird der Protokolltester durch ein Lasttestgerät realisiert.

Im Hinblick darauf, dass bei gegenwärtigen Standards für Telekommunikationsnetzwerke, beispielsweise GSM, GPRS, UMTS, die Datenübertragung aufgeteilt ist in Steuerungsebenendaten (Control Plane) und Benutzerebenendaten (User Plane), kann die übertragungsrelevante Information realisiert werden durch Steuerungsebenendaten und/oder Benutzerebenendaten.

Im Hinblick auf einen einfachen Vergleich gegenüber einer Vorgabe, beispielsweise Grenzwerte von Normen oder Vorgaben in Spezifikationen, ist es besonders bevorzugt, wenn die Bereiche einer Fläche, die innerhalb vorgebbarer Grenzen liegen, und/oder Bereiche einer Fläche, die in der Nähe vorgebbarer Grenzen liegen, und/oder Bereiche einer Fläche, die außerhalb vorgebbarer Grenzen liegen, unterschiedlich, insbesondere durch eine andere Farbe, dargestellt werden. Auf diese Art und Weise können Missstände sofort erkannt und Gegenmaßnahmen eingeleitet werden.

Besonders bevorzugt ist auf der Anzeigeeinheit eine graphische Benutzeroberfläche ausgebildet, wobei die Werte der Übertragungsparameter graphisch, insbesondere durch Verwendung eines Zeigergeräts, beispielsweise einer Computermaus, manipuliert werden können. Am Beispiel eines Lasttests können dadurch die Testparameter auf sehr einfache Weise modifiziert werden, ein Abgleich der einzelnen Übertragungsparameter kann auf schnelle und einfache Art und Weise bewirkt werden. Auf diese Art und Weise können auch Grenzwerte von Übertragungsparametern schnell in das System eingegeben werden und bestehende Werte geändert werden.

Bevorzugt werden durch die Werte der Übertragungsparameter die Übertragungsparameter einer laufenden Übertragung, insbesondere die Testparameter eines laufenden Lasttests, gemonitört. Bevorzugt werden hierbei die Anzeigen der Werte der Übertragungsparameter in vorgebbaren zeitlichen Abständen aktualisiert. Die Anzeige auf der Anzeigeeinheit pulsiert quasi im Rhythmus der Aktualisierungen. Es kann vorgesehen werden, dass Darstellungen, insbesondere solche, bei denen ein vorgebbarer Grenzwert überschritten wurde oder auf Tastendruck eines Benutzers auf einer Eingabevorrichtung, für eine spätere Auswertung in einer Speichervorrichtung abgespeichert werden.

Eine weitere vorteilhafte Ausführungsform zeichnet sich dadurch aus, dass durch die Werte der Übertragungsparameter die Übertragungsparameter einer abgeschlossenen Messung, insbesondere die gemessenen Werte der Übertragungsparameter eines abgeschlossenen Lasttests, visualisiert werden.

Weitere vorteilhafte Ausführungsformen sind in den Unteransprüchen definiert.

Im Nachfolgenden werden Ausführungsbeispiele der Erfindung unter Hinweis auf die beigefügten Zeichnungen näher beschrieben. Es stellen dar:

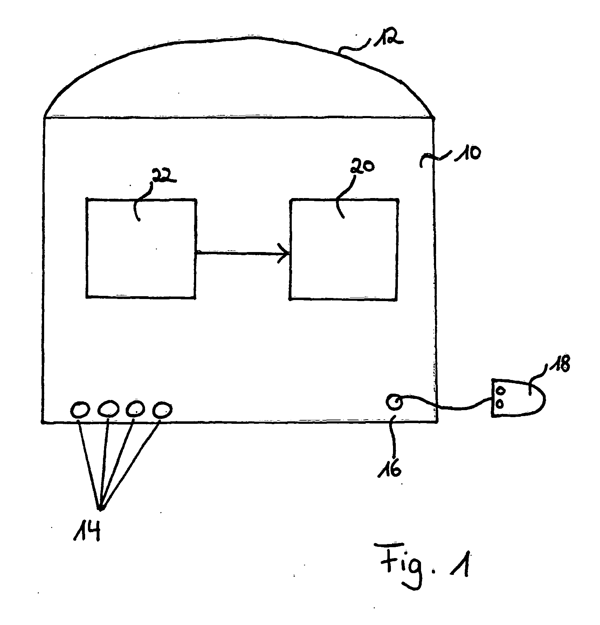

- Figur 1: in schematischer Darstellung ein Ausführungsbeispiel eines erfindungsgemäßen Protokolltesters;

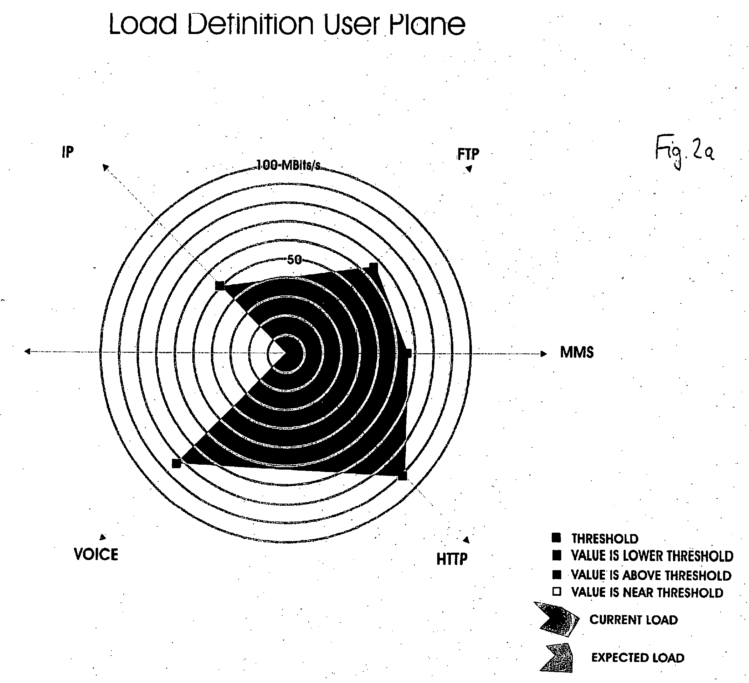

- Figur 2a: beispielhaft die Darstellung auf der Anzeigeeinheit zur Definition eines Lasttests betreffend die Benutzerebene;

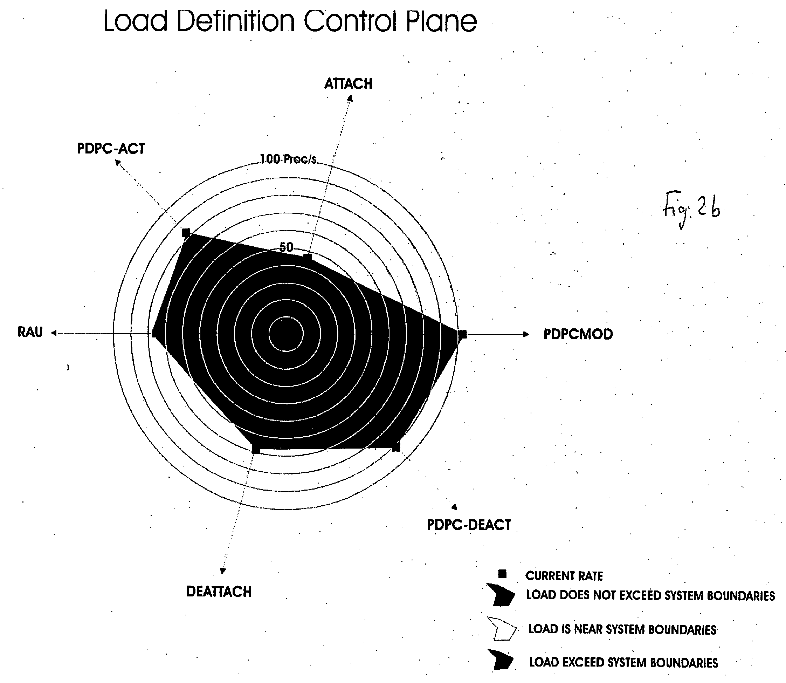

- Figur 2b: beispielhaft die Darstellung auf der Anzeigeeinheit zur Definition eines Lasttests betreffend die Steuerungsebene;

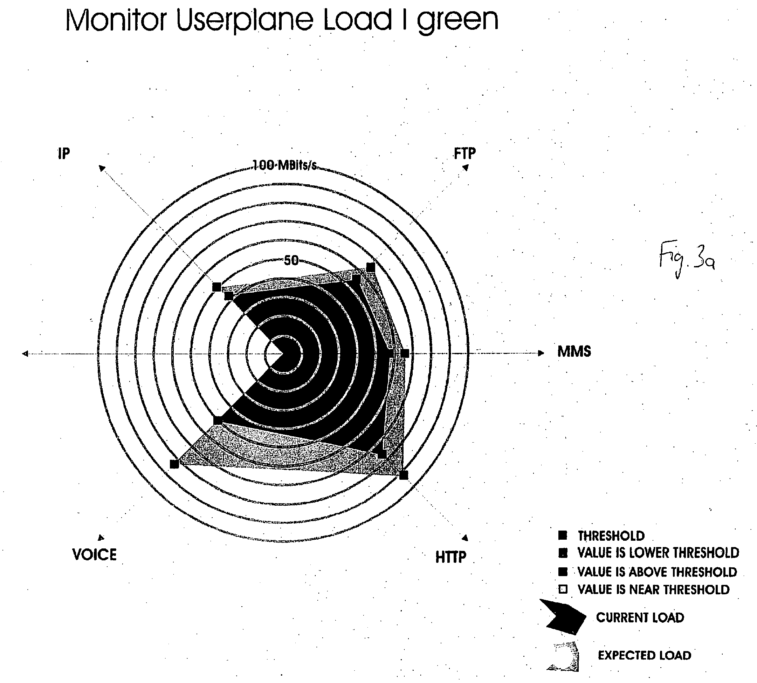

- Figur 3a: beispielhaft die Darstellung auf der Anzeigeeinheit im Falle des Monitorens der Last auf der Benutzerebene, wobei die gemonitorte Last die Grenzen der erwarteten Last nicht überschreitet;

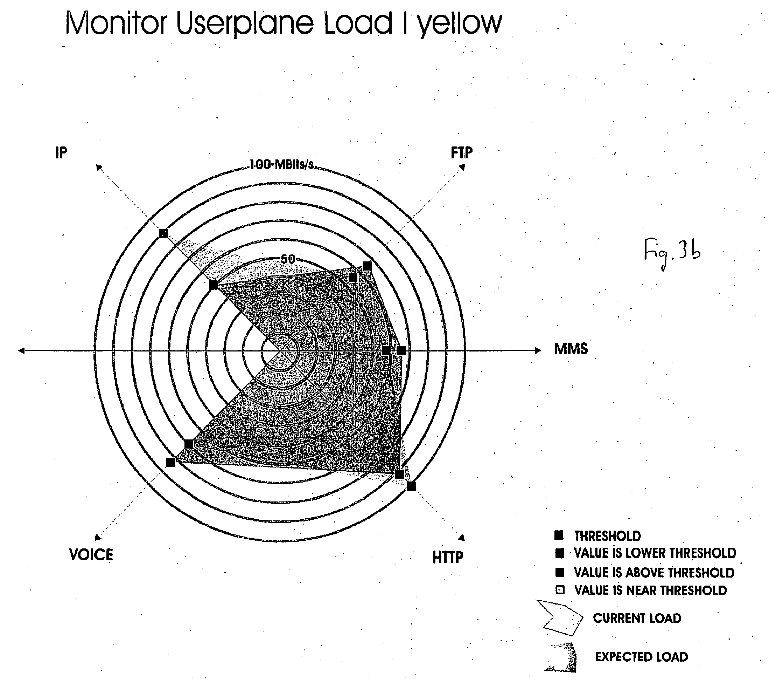

- Figur 3b: beispielhaft die Darstellung auf der Anzeigeeinheit im Falle des Monitorens der Last auf der Benutzerebene, wobei die gemonitorte Last die erwartete Last bei zwei Übertragungsparametern überschreitet, jedoch die Gesamtfläche der gemonitorten Last noch kleiner ist als die Gesamtfläche der erwarteten Last;

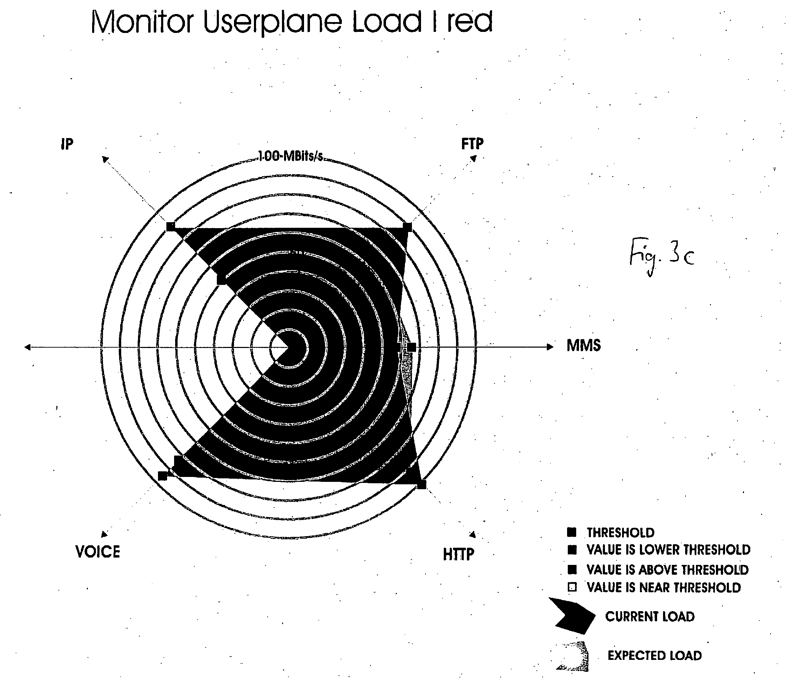

- Figur 3c: beispielhaft die Darstellung auf der Anzeigeeinheit im Falle des Monitorens der Last auf der Benutzerebene, wobei die gemonitorte Last die erwartete Last bei vier Übertragungsparametern überschreitet, jedoch die Gesamtfläche der gemonitorten Last die Gesamtfläche der erwarteten Last überschreitet;

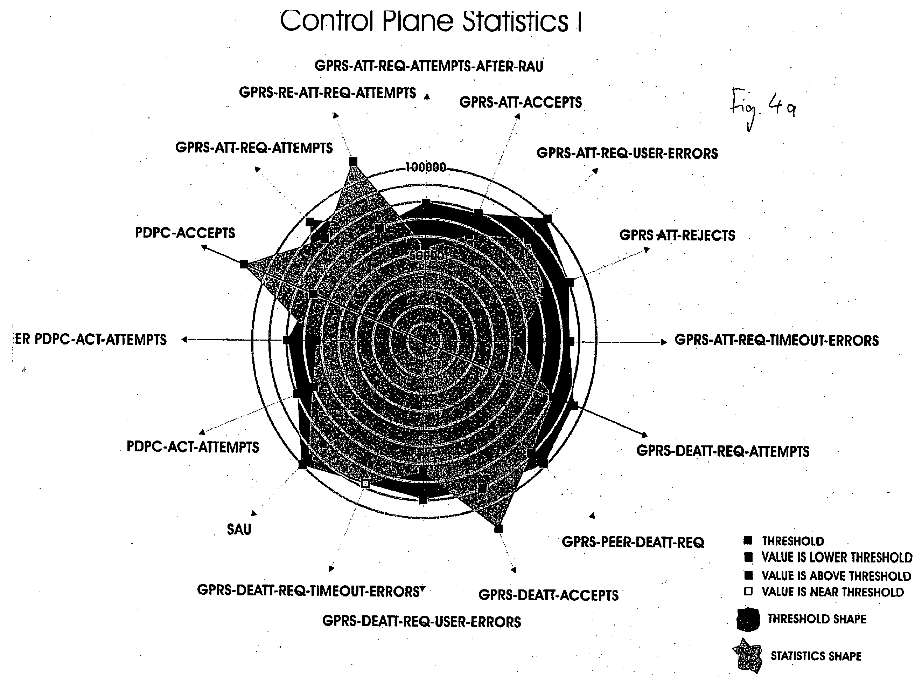

- Figur 4a: beispielhaft die Darstellung auf der Anzeigeeinheit nach einer durchgeführten Messung für die Visualisierung der Parameter der Steuerungsebene, wobei einerseits eine Fläche dargestellt ist, die von vorgegebenen Grenzwerten gebildet wird, andererseits eine Fläche dargestellt ist, die von den Messwerten der aktuellen Messung gebildet wird, wobei die Fläche, die sich aus den aktuellen Messwerten ergibt, die Fläche die sich aufgrund der Grenzwerte ergibt, überdeckt;

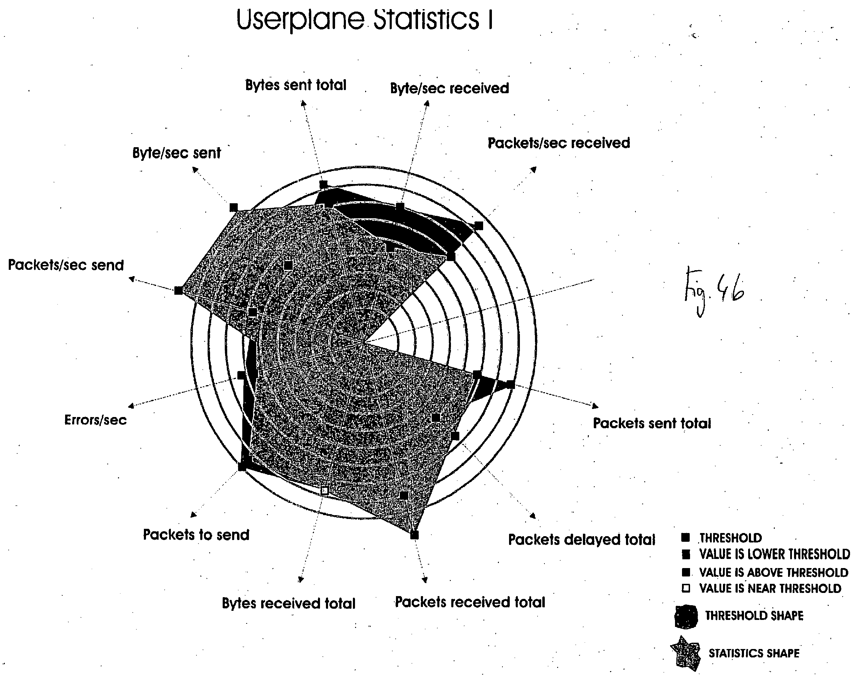

- Figur 4b: beispielhaft die Darstellung auf der Anzeigeeinheit nach einer durchgeführten Messung für die Visualisierung der Parameter der Benutzerebene, wobei einerseits eine Fläche dargestellt ist, die von vorgegebenen Grenzwerten gebildet wird, andererseits eine Fläche dargestellt ist, die von den Messwerten der aktuellen Messung gebildet wird;

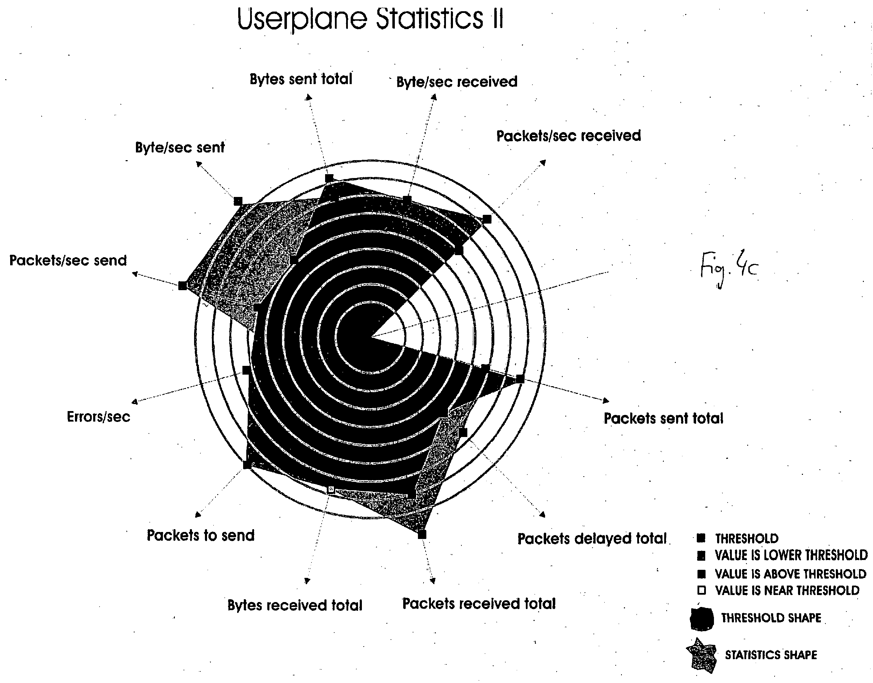

- Figur 4c: beispielhaft die Darstellung auf der Anzeigeeinheit nach einer durchgeführten Messung für die Visualisierung der Parameter der Benutzerebene, wobei einerseits eine Fläche dargestellt ist, die von vorgegebenen Grenzwerten gebildet wird, andererseits eine Fläche dargestellt ist, die von den Messwerten der aktuellen Messung gebildet wird, wobei die Grenzwertfläche durchscheinend dargestellt ist;

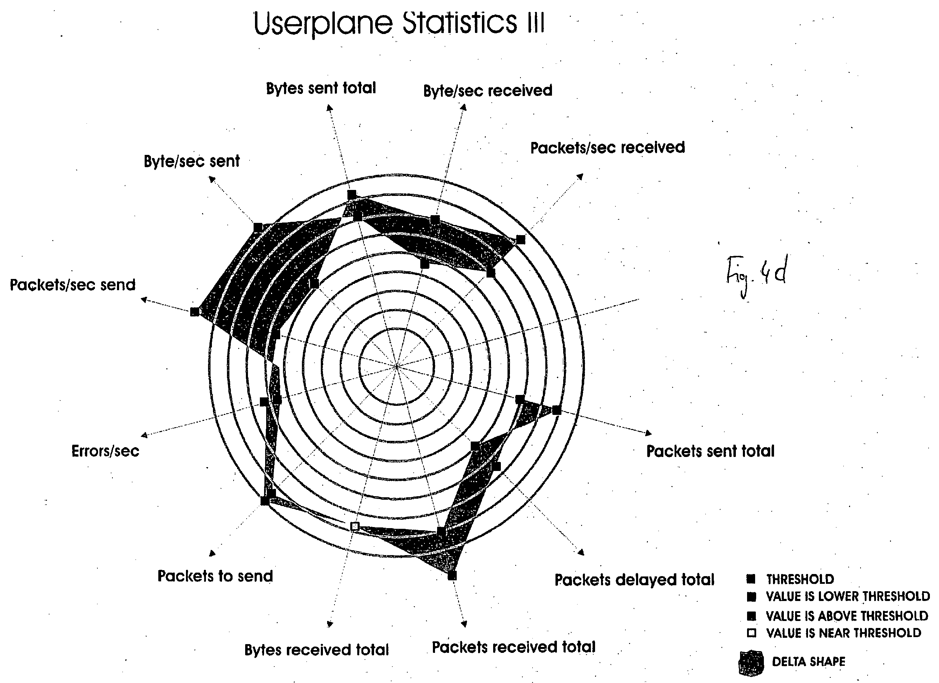

- Figur 4d: beispielhaft die Darstellung auf der Anzeigeeinheit nach einer durchgeführten Messung für die Visualisierung der Parameter der Benutzerebene, wobei einerseits eine Fläche dargestellt ist, die von vorgegebenen Grenzwerten gebildet wird, andererseits eine Fläche dargestellt ist, die von den Messwerten der aktuellen Messung gebildet wird, wobei die Differenz der beiden Flächen dargestellt ist.

Figur 1 zeigt einen erfindungsgemäßen Protokolltester 10 mit einem Tragegriff 12. Am Protokolltester ist eine Vielzahl von Anschlüssen 14 vorgesehen, um den Protokolltester mit mindestens einem Netzwerkelement oder mit einem Telekommunikationsnetzwerk zu verbinden. Über einen Anschluss 16 ist eine Computermaus 18 mit dem Protokolltester 10 verbindbar. Der Protokolltester 10 weist eine Anzeigeeinheit 20 und eine Steuerungseinheit 22 auf, die mit der Anzeigeeinheit 20 verbunden ist, um übertragungsrelevante Information zur Anzeige auf der Anzeigeeinheit 20 an die Anzeigeeinheit 20 zu übermitteln. Die übertragungsrelevante Information ist gemäß mindestens dreier Übertragungsparameter gliederbar. Die Steuerungseinheit 22 ist ausgelegt, die übertragungsrelevante Information an die Anzeigeeinheit 20 bereitzustellen, so dass sie auf der Anzeigeeinheit 20 in Form eines zweidimensionalen Multivariantengraphen darstellbar ist, wobei der Multivariantengraph eine Anzahl an Achsen aufweist, die zumindest der Anzahl der Übertragungsparameter entspricht und wobei die Werte der Übertragungsparameter entlang der Achsen des Multivariantengraphen auftragbar sind.

Figur 2a zeigt beispielhaft die Darstellung auf der Anzeigeeinheit für den Fall der Definition eines Lasttests der Benutzerebene. Der Multivariantengraph umfasst sechs Achsen, wobei bei nur fünf Achsen Übertragungsparameter zugewiesen sind. Die Achsen der Übertragungsparameter schneiden sich in einem Punkt, um den Kreise angeordnet sind, die zunehmenden Übertragungsraten entsprechen. Die fünf Übertragungsparameter entsprechen unterschiedlichen Formaten der übertragenen Daten, vorliegend VOICE, HTTP, MMS, FTP und IP. Die jeweils eingetragenen Werte der Übertragungsparameter, die durch kleine Quadrate gekennzeichnet sind, können mittels der Maus 18 verschoben werden oder über eine separate Eingabemaske geändert werden. Vorliegend sind die Werte auf die Grenzwerte der erwarteten Last gelegt, so dass die zwei Flächen der eingestellten Last einerseits sowie der erwarteten Last andererseits deckungsgleich sind. Der Graph der gegenwärtig eingestellten Last ist in einer ersten Farbe, beispielsweise grün, dargestellt, der Graph der erwarteten Last in einer zweiten Farbe, beispielsweise grau.

Figur 2b zeigt eine Figur 2a entsprechende Darstellung für die Definition eines Lasttests der Benutzerebene. Die konzentrischen Kreise entsprechen Ereignissen pro Zeiteinheit. Vorliegend sind beispielhaft sechs Übertragungsparameter dargestellt, nämlich ATTACH, PDPC-ACT, RAU, DEATTACH, PDPC-DEACT und PDPCMOD. Die gegenwärtig durch die Definitionen der Übertragungsparameter sich ergebende Fläche liegt innerhalb der Systemgrenzen und ist daher in einer ersten Farbe, beispielsweise grün, dargestellt.

Figur 3a zeigt beispielhaft die Darstellung auf der Anzeigeeinheit im Falle des Monitorens der Benutzerebene bei einem Lasttest mit den bereits aus Figur 2a bekannten Übertragungsparametern. Vorliegend sind zwei Flächen eingezeichnet, eine Fläche, die sich aus den gemonitorten Werten der Übertragungsparameter ergibt, eine zweite Fläche, die sich aus den Werten der Übertragungsparameter für die erwartete Last ergibt. Da die gemonitorten Werte der Übertragungsparameter durchweg kleiner sind als die Werte der Übertragungsparameter der zu erwartenden Last, liegt die sich aus den gemonitorten Werten ergebende Fläche innerhalb der Fläche, die sich aus den Werten der erwarteten Last ergibt und ist in einer ersten Farbe, beispielsweise grün, dargestellt. Die Fläche, die der erwarteten Last entspricht, ist in einer zweiten Farbe, beispielsweise grau, dargestellt.

Figur 3b zeigt die Darstellung von Figur 3a, wobei die gemonitorten Werte in zwei übertragungsparametern größer sind als die entsprechenden Werte der erwarteten Last. Allerdings ist die sich aufgrund des Monitorens ergebende Fläche noch kleiner als die Fläche der erwarteten Last. Die Fläche, die sich aufgrund des Monitorens ergibt, ist in einer dritten Farbe, beispielsweise gelb, dargestellt.

Figur 3c zeigt die Darstellung von Figur 3a und 3b, wobei jedoch nunmehr vier gemonitorte Werte größer sind als die entsprechenden Werte der Übertragungsparameter der erwarteten Last. Überdies ist die Gesamtfläche, die sich aufgrund der gemonitorten Werte ergibt, größer als die Gesamtfläche, die sich aufgrund der erwarteten Last ergibt.

Die sich aufgrund der gemonitorten Werte ergebende Fläche ist in einer vierten Farbe, beispielsweise rot, eingezeichnet.

Für die durch die kleinen quadratischen Kästchen eingetragenen Grenzwerte bzw. gemonitorten Werte gilt ein ähnlicher Farbcode wie für die Flächen in den Figuren 3a bis 3c: Die vorgegebenen Werte, beispielsweise die Werte der erwarteten Last, sind in einer fünften Farbe, beispielsweise blau, gekennzeichnet. Ist der gemonitorte Werte kleiner als der erwartete Wert, ist das entsprechende quadratische Kästchen von grüner Farbe, ist der gemonitorte Werte größer als der erwartete Wert, ist das entsprechende Kästchen von roter Farbe. Ist der gemonitorte Wert in der Nähe des erwarteten Werts, ist das entsprechende Kästchen von gelber Farbe.

Figur 4a zeigt beispielhaft die Darstellung auf der Anzeigeeinheit bei der Visualisierung der Ergebnisse betreffend die Steuerungsebene, wobei die Kreise mit zunehmendem Radius einer zunehmenden Anzahl der durch die Übertragungsparameter gekennzeichneten Ereignisse entsprechen. Die Ergebnisse können hierbei aufgrund eines Tests ermittelt worden sein oder auch aufgrund einer Messung an einem realen Netzwerk bzw. Netzwerkelement. Der Multivariantengraph stellt 16 unterschiedliche Übertragungsparameter dar, wobei zwei Flächen gebildet sind: Eine Fläche, die sich aufgrund vorgegebener Grenzwerte für die 16 Übertragungsparameter ergibt, eine Fläche, die sich aufgrund der gemessenen Werte für die Übertragungsparameter ergibt. Die sich aufgrund der gemessenen Werte ergebende Fläche überdeckt die sich aufgrund der Vorgaben ergebende Fläche. Gemäß dem im Zusammenhang mit Figur 3c beschriebenen Farbcode ist der Wert eines Übertragungsparameters, der sich in der Nähe eines vorgebbaren Grenzwerts desselben Übertragungsparameters befindet, mit einer weiteren Farbe, beispielsweise durch ein gelbes Quadrat, gekennzeichnet. Die in den Figuren beispielhaft dargestellten Übertragungsparameter sind dem Fachmann auf dem Gebiet der Telekommunikationstechnik einschlägig bekannt und da die Art der Übertragungsparameter für die Erfindung selbst ohne Relevanz ist, wird vorliegend deshalb nicht näher darauf eingegangen.

Figur 4b zeigt beispielhaft eine Darstellung auf der Anzeigeeinheit, die derjenigen von Figur 4a entspricht, mit dem Unterschied, dass in Figur 4b Übertragungsparameter die Benutzerebene betreffend aufgetragen sind. In Figur 4b überdeckt die Fläche, die sich aufgrund der gemessenen Werte der Übertragungsparameter ergibt, die Fläche, die sich aufgrund der vorgegebenen Grenzwerte der Übertragungsparameter ergibt.

In Figur 4c ist die aufgrund der vorgebbaren Grenzwerte sich ergebende Fläche durchscheinend ausgebildet, so dass beide Flächen gleichzeitig auf der Anzeigeeinheit dargestellt werden können.

Figur 4d entspricht der Darstellung von Figur 4c, wobei nunmehr lediglich die Differenz der beiden Flächen dargestellt ist.

In einer weiteren nicht dargestellten Ausführungsform kann eine positive Differenz in einer ersten Farbe, eine negative Differenz in einer zweiten Farbe dargestellt sein.

Anstelle der in der Anmeldung erwähnten unterschiedlichen Farben können unterschiedliche Helligkeitsstufen einer Farbe oder bei monochromer Darstellung unterschiedliche Graustufen verwendet werden.

### ABKÜRZUNGSVERZEICHNIS:

| | |
|---|---|
| **ATTACH** (Attach Procedure) | **ATTACH** (Anschlussvorgang) |
| | |
| **PDPC-ACT** | **PDPC-ACT** |
| (Packet Data Protocol Context Activation) | (Paket-Daten-Protokoll-Kontext-Aktivierung) |
| | |
| **RAU** (Routing Area Update) | **RAU** (Routing-Bereich-Aktualisierung) |
| | |
| **DEATACH** (Detach Procedure) | **DEATACH** (Vorgang der Verbindungs- |
| | trennung) |
| | |
| **PDPC-DEACT** | **PDPC-DEACT** |
| (Packet Data Protocol Context Deactivation) | (Paket-Datenprotokoll-Kontext-Aktivierung) |
| | |
| **PDPC-MOD** | **PDPC-MOD** |
| Packet Data Protocol Context Modification | (Paket-Daten-Protokoll-Kontext-Modifikation) |
| | |
| **IP** (Internet Protocol Traffic) | **IP** (lnternet-Protokoll-Verkehr) |
| | |
| **VOICE** (Voice Traffic) | **VOICE** (Sprechverkehr) |
| | |
| **FTP** (File Transfer Protocol) | **FTP** (Datei-Übertragungsprotokoll) |
| | |
| **MMS** (Multi Media SMS) | **MMS** (Multimedia-SMS) |
| | |
| **SMS** (Short Message Service) | **SMS** (Kurznachrichten-Service) |
| | |
| **HTTP** (Hypertext Transfer Protocol) | **HTTP** (Hypertext-Übertragungsprotokoll) |
| | |
| **GPRS-ATT-REJECTS** (Counts number | **GPRS-ATT-REJECTS** (zählt Anzahl der |
| of GPRS Attach Rejects Procedures) | GPRS-Anschlusszurückweisungs-Vorgänge) |
| | |
| **GPRS-ATT-REQ-TIMEOUT-ERRORS** | **GPRS-ATT-REQ-TIMEOUT-ERRORS** |
| (Counts numbers of timeouts of GPRS | (zählt Anzahl der Zeitsperren der |
| Attach Request Procedures) | GPRS-Anschlussanfrage-Vorgänge) |
| | |
| **GPRS-DEATT-REQ-ATTEMPS** | **GPRS-DEATT-REQ-ATTEMPS** |
| (Counts number of GPRS Detach | (zählt Anzahl der Versuchsvorgänge |
| Request Attempt Procedures) | zur Anfrage um Verbindungstrennung) |
| | |
| **GPRS-PEER DEATT-REQ** | **GPRS-PEER DEATT-REQ** |
| (Counts number of Peer Detach | (zählt Anzahl der gleichartigen Vorgänge |
| Request Procedures) | zur Anfrage um Verbindungstrennung) |
| | |
| **GPRS-DEATT-ACCEPTS** | **GPRS-DEATT-ACCEPTS** |
| (Counts number of GPRS Detach | (zählt Anzahl der Vorgänge |
| Accept Procedures) | akzeptierter Verbindungstrennung) |
| | |
| **GPRS-DEATT-REQ-USER-ERRORS** | **GPRS-DEATT-REQ-USER-ERRORS** |
| (Counts number of Detach Request | (zählt Anzahl der Benutzerfehler bei |
| User Errors) | der Anfrage nach Verbindungstrennung) |
| | |
| **GPRS-DEATT-REQ-TIMEOUT-ERRORS** | **GPRS-DEATT-REQ-TIMEOUT-ERRORS** |
| (Counts number of timeouts of Detach | (zählt Anzahl der Zeitsperren der |
| Request) | Anfragen nach Verbindungstrennung) |
| | |
| **SAU** (Simultaneously Attached Users) | **SAU** (gleichzeitig verbundene Benutzer) |
| | |
| **PDPC-ACT-ATTEMPTS** (Packet Data | **PDPC-ACT-ATTEMPTS** (Versuche zur |
| Protocol Context Activation Attempts) | Paket-Daten-Kontext-Aktivierung) |
| | |
| **PEER-PDPC-ACT-ATTEMPTS** | **PEER-PDPC-ACT-ATTEMPTS** |
| (Peer Packet Data Protocol Context | (Versuche gleichwertiger Paket-Daten- |
| Activation Attempts) | Protokoll-Kontext-Aktivierung) |
| | |
| **PDPC-ACCEPTS** (Peer Packet Data | **PDPC-ACCEPTS** (akzeptierte gleich- |
| Protocol Context Accepts) | wertige Paket-Daten-Protokoll-Kontext) |
| | |
| **GPRS-ATT-REQ-ATTEMPTS** | **GPRS-ATT-REQ-ATTEMPTS** |
| (GPRS Attach Request Attempts) | (GPRS-Anschluss-Anfrageversuche) |
| | |
| **GPRS-RE-ATT-REQ-ATTEMPTS** | **GPRS-RE-ATT-REQ-ATTEMPTS** |
| (GPRS Re-Attach Request Attempts) | (Anfrageversuche nach erneutem |
| | GPRS-Anschluss) |
| | |
| **GPRS-ATT-REQ-ATTEMPTS-AFTER-RAU** | **GPRS-ATT-REQ-ATTEMPTS-AFTER-RAU** |
| (GPRS Attach Request Attempts after | (Anfrageversuche zum GPRS-Anschluss |
| Routing Area Updates) | nach Routing-Gebiet-Aktualisierung) |
| | |
| **GPRS-ATT-ACCEPTS** | **GPRS-ATT-ACCEPTS** |
| (GPRS Attach Accepts) | (akzeptierte GPRS-Anschlüsse) |
| | |
| **GPRS-ATT-REQ-USER-ERRORS** | **GPRS-ATT-REQ-USER-ERRORS** |
| (GPRS Attach Request User Errors) | (Benutzerfehler bei der GPRS- |
| | Anschlussanfrage) |

## Patentansprüche

1. Protokolltester für ein Telekommunikationssystem, wobei der Protokolltester (10) eine Anzeigeeinheit (20) und eine Steuerungseinheit (22) aufweist, die mit der Anzeigeeinheit (20) verbunden ist, um übertragungsrelevante Information zur Anzeige auf der Anzeigeeinheit (20) an die Anzeigeeinheit (20) zu übermitteln, und wobei die übertragungsrelevante Information gemäß mindestens dreier Übertragungsparameter gliederbar ist, und die Steuerungseinheit (22) ausgelegt ist, die übertragungsrelevante Information an die Anzeigeeinheit (20) bereitzustellen, so dass sie auf der Anzeigeeinheit (20) in Form eines zweidimensionalen Multivariantengraphen darstellbar ist, wobei der Multivariantengraph eine Anzahl an Achsen aufweist, die zumindest der Anzahl der Übertragungsparameter entspricht, wobei die Werte der Übertragungsparameter entlang der Achsen des Multivariantengraphen auftragbar sind, und wobei die in den Multivariantengraphen jeweils eingetragenen Werte der mindestens drei Übertragungsparameter zur Erzeugung einer Fläche miteinander verbindbar sind,
**dadurch gekennzeichnet,**
**dass** mehrere Sätze von Werten der Übertragungsparameter vorhanden sind, wobei eine erste Fläche einem ersten Satz von Werten der Übertragungsparameter entspricht und eine i-te Fläche einem i-ten Satz von Werten der Übertragungsparameter und die Differenz zumindest zweier oder mehrerer Flächen darstellbar ist.

2. Verfahren zur Darstellung übertragungsrelevanter Information betreffend ein Telekommunikationssystem auf einem Protokolltester (10), der eine Anzeigeeinheit (20) aufweist, wobei die übertragungsrelevante Information gemäß mindestens dreier Übertragungsparameter gliederbar ist,
umfassend folgenden Schritt:
Darstellen der übertragungsrelevanten Information in Form eines zweidimensionalen Multivariantengraphen auf der Anzeigeeinheit (20) derart, dass der Multivariantengraph eine Anzahl an Achsen aufweist, die zumindest der Anzahl der Übertragungsparameter entspricht, wobei die Werte der Übertragungsparameter entlang der Achsen des Multivariantengraphen aufgetragen werden, und wobei die in den Multivariantengraphen jeweils eingetragenen Werte der mindestens drei Übertragungsparameter zur Erzeugung einer Fläche miteinander verbunden werden,
**dadurch gekennzeichnet,**
**dass** mehrere Sätze von Werten der Übertragungsparameter vorhanden sind, wobei eine erste Fläche einem ersten Satz von Werten der Übertragungsparameter entspricht und eine i-te Fläche einem i-ten Satz von Werten der Übertragungsparameter und die Differenz zumindest zweier oder mehrerer Flächen dargestellt wird.

3. Verfahren nach Anspruch 2,
**dadurch gekennzeichnet,**
**dass** die übertragungsrelevante Information durch lasttestbezogene Daten, die Übertragungsparameter durch Lasttestparameter und der Protokolltester (10) durch ein Lasttestgerät realisiert werden.

4. Verfahren nach Anspruch 2 oder 3,
**dadurch gekennzeichnet,**
**dass** die übertragungsrelevante Information realisiert wird durch Steuerungsebenendaten und/oder Benutzerebenendaten.

5. Verfahren nach einem der Ansprüche 2 bis 4,
**dadurch gekennzeichnet,**
**dass** Bereiche einer Fläche, die innerhalb vorgebbarer Grenzen liegen, und/oder Bereiche einer Fläche, die in der Nähe vorgebbarer Grenzen liegen, und/oder Bereiche einer Fläche, die außerhalb vorgebbarer Grenzen liegen, unterschiedlich, insbesondere durch eine andere Farbe, dargestellt werden.

6. Verfahren nach einem der Ansprüche 2 bis 5,
**dadurch gekennzeichnet,**
**dass** auf der Anzeigeeinheit (20) eine graphische Benutzeroberfläche ausgebildet wird, wobei die Werte der Übertragungsparameter graphisch, insbesondere durch Verwendung einer Computermaus (18), manipuliert werden.

7. Verfahren nach einem der Ansprüche 2 bis 6,
**dadurch gekennzeichnet,**
**dass** durch die Werte der Übertragungsparameter die Übertragungsparameter einer laufenden Übertragung, insbesondere die Testparameter eines laufenden Lasttests, gemonitort werden.

8. Verfahren nach Anspruch 7,
**dadurch gekennzeichnet,**
**dass** die Anzeige der Werte der Übertragungsparameter in vorgebbaren zeitlichen Abständen aktualisiert wird.

9. Verfahren nach einem der Ansprüche 2 bis 8,
**dadurch gekennzeichnet,**
**dass** durch die Werte der Übertragungsparameter die Übertragungsparameter einer abgeschlossenen Messung, insbesondere die Testparameter eines abgeschlossenen Lasttests, visualisiert werden.

## Claims

1. Protocol tester for a telecommunication system, wherein the protocol tester (10) exhibits a display unit (20) and a control unit (22), which is connected to the display unit (20), to transmit transmission-relevant information to the display unit (20) for display on the display unit (20), and wherein the transmission-relevant information is classifiable according to at least three transmission parameters, and the control unit (22) is designed to make the transmission-relevant information available to the display unit (20) so that it is presentable on the display unit (20) in the form of a two-dimensional multi-variant chart, wherein the multi-variant chart exhibits a number of axes, which corresponds at least to the number of transmission parameters, wherein the values of the transmission parameters are plottable along the axes of the multi-variant chart, and wherein the values entered into the multi-variant chart of the at least three transmission parameters are connectable with each other for generating an area,
**characterized in that**
several sets of values of the transmission parameters are present, with a first area corresponding to a first set of values of the transmission parameters and an i^{th} area to an i^{th} set of values of the transmission parameters and the difference of at least two or several areas being presentable.

2. Method for presenting transmission-relevant information relating to a telecommunication system on a protocol tester (10), which exhibits a display unit, wherein the transmission-relevant information is classifiable according to at least three transmission parameters,
comprising the following step:
presentation of the transmission-relevant information in the form of a two-dimensional multi-variant chart on the display unit (20) in such a way that the multi-variant chart exhibits a number of axes, which corresponds at least to the number of transmission parameters, wherein the values of the transmission parameters are plotted along the axes of the multi-variant chart, and wherein the values of the at least three transmission parameters entered into the multi-variant chart are connected with each other for generating an area,
**characterized in that**
several sets of values of the transmission parameters are present, with a first area corresponding to a first set of values of the transmission parameters and an i^{th} area to an i^{th} set of values of the transmission parameters and the difference of at least two or three areas being presented.

3. Method according to claim 2,
**characterised in that**
the transmission-relevant information is realised through load test-related data, the transmission parameters are realised through load test parameters and the protocol tester (10) is realised through a load test appliance.

4. Method according to claim 2 or 3,
**characterised in that**
the transmission-relevant information is realised by control plane parameters and/or user plane data.

5. Method according to one of claims 2 to 4,
**characterised in that**
parts of an area located within specifiable thresholds and/or parts of an area located in the vicinity of specifiable thresholds and/or parts of an area located outside specifiable thresholds are shown in different ways, especially by way of another colour.

6. Method according to one of claims 2 to 5,
**characterised in that**
on the display unit (20) there is provided a graphical user interface, wherein the values of the transmission parameters are manipulated graphically, particularly through the use of a computer mouse (18).

7. Method according to one of claims 2 to 6,
**characterised in that**
the transmission parameters of a transmission under way, particularly the test parameters of a load test under way, are monitored through the values of the transmission parameters.

8. Method according to claim 7,
**characterised in that**
the display of the values of the transmission parameters is updated at specifiable intervals.

9. Method according to one of claims 2 to 8,
**characterised in that**
the transmission parameters of a completed measurement, particularly the test parameters of a completed load test, are visualised through the values of the transmission parameters.

## Revendications

1. Dispositif de contrôle de protocole pour un système de télécommunication, sachant que le dispositif de contrôle de protocole (10) présente une unité d'affichage (20) et une unité de commande (22) qui est reliée à l'unité d'affichage (20) afin de transmettre à l'unité d'affichage (20) des informations important pour la transmission et destinées à l'affichage à l'unité d'affichage (20), sachant que les informations important pour la transmission sont divisibles selon au moins trois paramètres de transmission, et que l'unité de commande (22) est configurée pour mettre à disposition les informations important pour la transmission à l'unité d'affichage (20), de sorte qu'elles soient représentables sur ladite unité d'affichage (20) sous la forme d'un graphe multivariantes bidimensionnel, sachant que le graphe multivariantes présente un nombre d'axes équivalant au moins au nombre des paramètres de transmission, sachant que les valeurs des paramètres de transmission sont rapportables le long des axes du graphe multivariantes, et sachant que les valeurs respectives inscrites dans les graphes multivariantes d'au moins trois paramètres de transmission sont combinables les unes avec les autres afin de créer une surface,
**caractérisé en ce que**
plusieurs séquences de valeurs des paramètres de transmission existent, sachant qu'une première surface correspond à une première séquence de valeurs des paramètres de transmission, une i-ème surface à une i-ème séquence de valeurs des paramètres de transmission et que la différence d'au moins deux ou plusieurs surfaces est représentable.

2. Procédé destiné à la représentation des informations important pour la transmission concernant un système de télécommunication sur un dispositif de contrôle de protocole (10) qui présente une unité d'affichage (20), sachant que les informations important pour la transmission sont divisibles selon au moins trois paramètres de transmission,
comprenant l'étape suivante :
représentation des informations important pour la transmission sous la forme d'un graphe multivariantes bidimensionnel sur l'unité d'affichage (20) de sorte que le graphe multivariantes présente un nombre d'axes équivalant au moins au nombre des paramètres de transmission, sachant que les valeurs des paramètres de transmission sont rapportées le long des axes du graphe multivariantes, et sachant que les valeurs respectives inscrites dans le graphe multivariante d'au moins trois paramètres de transmission sont combinées les unes avec les autres afin de créer une surface,
**caractérisé en ce que**
plusieurs séquences de valeurs des paramètres de transmission existent, sachant qu'une première surface correspond à une première séquence de valeurs des paramètres de transmission, une i-ème surface à une i-ème séquence de valeurs des paramètres de transmission et que la différence d'au moins deux ou plusieurs surfaces est représentée.

3. Procédé selon la revendication 2,
**caractérisé en ce que**
les informations important pour la transmission sont réalisées par des données relatives au contrôle de charge, les paramètres de transmission par des paramètres de contrôle de charge et le dispositif de contrôle de protocole (10) par un appareil de contrôle de charge.

4. Procédé selon les revendications 2 ou 3,
**caractérisé en ce que**
les informations important pour la transmission sont réalisées par des données de niveau de commande et/ou de plan d'usager.

5. Procédé selon l'une des revendications 2 à 4,
**caractérisé en ce que**
les zones d'une surface qui se trouvent au sein de limites prescriptibles, et/ou les zones d'une surface qui se trouvent à proximité de limites prescriptibles, et/ou les zones d'une surface qui se trouvent en dehors de limites prescriptibles, sont représentées différemment, notamment par une autre couleur.

6. Procédé selon l'une des revendications 2 à 5,
**caractérisé en ce que**
sur l'unité d'affichage (20), une interface utilisateur graphique est constituée, sachant que les valeurs des paramètres de transmission se manipulent graphiquement, notamment en utilisant une souris informatique (18).

7. Procédé selon l'une des revendications 2 à 6,
**caractérisé en ce que**
par les valeurs des paramètres de transmission, les paramètres de transmission d'une transmission en cours sont surveillés, notamment les paramètres de contrôle d'un contrôle de charge en cours.

8. Procédé selon la revendication 7,
**caractérisé en ce que**
l'affichage des valeurs des paramètres de transmission est actualisé dans des intervalles périodiques prescriptibles.

9. Procédé selon l'une des revendications 2 à 8,
**caractérisé en ce que**
par les valeurs des paramètres de transmission, les paramètres de transmission d'une mesure terminée sont visualisés, notamment les paramètres de contrôle d'un contrôle de charge terminé.
